# EUROPÄISCHE PATENTANMELDUNG

(11) **EP 1 752 684 A2**
(43) Veröffentlichungstag der Anmeldung: **14.02.2007**
(21) Anmeldenummer: 06016359.9
(22) Anmeldetag: 04.08.2006
(51) Int. Cl.: F16F 15/32, F16F 15/34

(54) **Wuchtgewicht**

(30) Priorität: 08.08.2005 DE 202005012450 U
(71) Anmelder: Bettchen, Uwe, 42579 Heiligenhaus (DE)
(72) Erfinder: Bettchen, Uwe, 42579 Heiligenhaus (DE)
(74) Vertreter: Volpert, Marcus

(57) **Zusammenfassung**

Die Erfindung bezieht sich auf ein Wuchtgewicht zum Auswuchten von Fahrzeugrädern bzw. Felgen mit einem das Gewicht bildenden Gewichtskörper (10) und einer Feder (14) zum Befestigen des Wuchtgewichtes an einem Fahrzeugrad bzw. Felgenhorn. Erfindungsgemäß ist die Feder (14) zwecks Möglichkeit der Überprüfung der Verbindung zwischen Feder (14) und Gewichtskörper (10) auch nach dem Befestigen des Wuchtgewichtes an dem Fahrzeugrad bzw. Felgenhorn optisch auf etwaige Beschädigungen hin außen an der Oberfläche des Gewichtskörpers (10) befestigt.

## Beschreibung

Die vorliegende Erfindung betrifft ein Wuchtgewicht zum Auswuchten von Fahrzeugrädern bzw. Felgen mit einem das Gewicht bildenden Gewichtskörper und einer Feder zum Befestigen des Wuchtgewichtes an einem Fahrzeugrad bzw. Felgenhorn gemäß dem Oberbegriff des Anspruchs 1.

Es sind bisher Wuchtgewichte aus Zink bekannt, die in einem Guss-Pressverfahren hergestellt werden. Hierbei wird der Gewichtskörper aus Zink in einer Form ausgebildet. Gleichzeitig wird die Feder mit eingegossen, so dass nach dem Fertigstellen des Gewichtskörpers das vollständige Wuchtgewicht mit Gewichtskörper und Feder fertig gestellt ist. Derartige Wuchtgewichte werden zum Auswuchten mit der Feder auf ein Felgenhorn geschlagen. Nachteilig ist hierbei jedoch, dass nach dem Aufschlagen des Wuchtgewichtes auf das Felgenhorn nicht überprüft werden kann, ob die Verbindung zwischen Feder und Gewichtskörper beschädigt ist, da der mit dem Gewichtskörper verbundene Teil der Feder innerhalb des Gewichtskörpers, d.h. in diesen eingegossen, angeordnet ist. Etwaige Bruchstellen befänden sich innerhalb des Gewichtskörpers und sind daher von außen nicht sichtbar. Im ungünstigsten Fall wird das Wuchtgewicht durch die Einwirkung von Fliehkräften durch die sich drehende Felge verloren und die Felge bzw. das Fahrzeugrad ist nicht mehr ausgewuchtet und läuft unruhig. Neben unerwünschten Vibrationen kann dies zu einer Beschädigung eines Lagers des Fahrzeugrades führen.

Ein Wuchtgewicht nach dem Oberbegriff des Patentanspruchs 1 ist aus der EP 0 994 274 B1 bekannt. Bei diesem Wuchtgewicht ist die Feder zumindest teilweise an der Oberfläche des Gewichtskörpers befestigt. Die Feder liegt gemäß dieser Schrift innen am Gewichtskörper an; sie ist also auf derjenigen Seite des Gewichtskörpers befestigt, welche nach innen, d.h. zum Fahrzeugrad bzw. zur Felge hin, weist.

Der Erfindung liegt die Aufgabe zugrunde, ein Wuchtgewicht der o.g. Art bzgl. der Funktionssicherheit zu verbessern und bzgl. der Herstellung zu vereinfachen.

Diese Aufgabe wird erfindungsgemäß durch ein Wuchtgewicht der o.g. Art mit den in Anspruch 1 gekennzeichneten Merkmalen gelöst. Vorteilhafte Ausgestaltungen der Erfindung sind in den weiteren Ansprüchen beschrieben.

Bei einem Wuchtgewicht der o.g. Art ist es erfindungsgemäß vorgesehen, dass die Feder an der Oberfläche des Gewichtskörpers befestigt ist. Mit anderen Worten liegt die Feder außen, d.h. auf der vom Fahrzeugrad weg weisenden Seite, an der Oberfläche des Gewichtskörpers an und ist dort mit geeigneten Mitteln befestigt.

Dies hat den Vorteil, dass die Verbindung zwischen Feder und Gewichtskörper auch nach dem Befestigen des Wuchtgewichtes an einem Fahrzeugrad bzw. Felgenhorn optisch auf etwaige Beschädigungen hin, die ggf. die Haltekraft an dem Fahrzeugrad bzw. Felgenhorn beeinträchtigen, überprüft werden kann.

Beispielsweise ist die Feder mittels Nieten, Schrauben, Kleben und/oder Schweißen an der Oberfläche des Gewichtskörpers befestigt.

In einer bevorzugten Ausführungsform weist der Gewichtskörper an seiner Oberfläche wenigstens eine Erhebung auf, die durch wenigstens eine Ausnehmung in der Feder greift und in der Art einer Niete die Feder an dem Gewichtskörper befestigt. Diese Erhebung ist beispielsweise einstückig mit dem Gewichtskörper, insbesondere rund, oval, elliptisch oder dreieckig, ausgebildet.

Vorteilhafterweise weist der Gewichtskörper eine Nut auf, in der die Feder zumindest teilweise aufgenommen ist, wobei vorzugsweise die Nut zumindest in dem Bereich der Oberfläche des Gewichtskörpers ausgebildet ist, welcher die Erhebung aufweist. Dadurch ist es möglich, die Feder auch formschlüssig mit dem Gewichtskörper zu verbinden. Zwischen Gewichtskörper und Feder auftretende Relativkräfte können also nicht nur im Bereich der Erhebung des Gewichtskörpers und der Ausnehmung der Feder sondern auch in dem gesamten Kontaktbereich zwischen Gewichtskörper und Feder entlang der Nut abgebaut bzw. übertragen werden.

Gemäß einer anderen Weiterbildung der Erfindung ist die Feder im Bereich ihrer Ausnehmung spannringartig mit wenigstens einer Rastnase, vorzugsweise mit mehreren Rastnasen, ausgebildet, wobei die wenigstens eine Rastnase fest mit der Erhebung des Gewichtskörpers verbindbar, vorzugsweise verrastbar ist. Bei dieser Weiterbildung kann daher eine kraftaufwändige Verformung, wie zum Beispiel beim Vernieten auf die Erhebung des Gewichtskörpers, entfallen. Vielmehr kann die Feder mit ihrer wenigstens einen Rastnase so auf die Erhebung aufgesteckt werden, dass die wenigstens eine Rastnase und damit die komplette Feder fest mit der Erhebung und dadurch mit dem Gewichtskörper verbunden bzw. verrastet ist.

Gemäß einer anderen Weiterbildung der Erfindung sind Gewichtskörper und Feder mittels eines auf der Erhebung sitzenden Spannrings fest verbindbar, wobei der Spannring vorzugsweise mehrere an der Erhebung verrastbare Rastnasen aufweist. Bei dieser Weiterbildung kann die Feder vor allem im Bereich ihrer Ausnehmung relativ einfach aufgebaut sein. Sie wird einfach mit ihrer Ausnehmung auf die Erhebung des Gewichtskörpers aufgesteckt, anschließend wird der Spannring so von außen auf die Feder über die Erhebung aufgedrückt, dass die vorzugsweise mehreren Rastnasen des Spannrings fest an der Erhebung angreifen und somit ein Lösen der Verbindung zwischen Spannring und Erhebung und damit **auch zwischen Feder und Gewichtskörper verhindert ist.**

In einer besonders bevorzugten Weiterbildung der Erfindung ist der Gewichtsköper ein Tempergussteil, vorzugsweise ein in ausschmelzbaren Formen aus Wachs oder Kunststoff im Feingussverfahren hergestelltes Tempergussteil. Dieses hat den Vorteil, dass ein Gewichtskörper zur Verfügung steht, welcher kaltverformbar ist. Dies ist insbesondere vorteilhaft hinsichtlich der weiteren Bearbeitung des Gewichtsköpers sowie bei der Anwendung als Auswuchtgewicht, da der Gewichtskörper auch bei mechanischer Krafteinwirkung nicht bricht, sondern sich allenfalls plastisch verformt. Ein derartiger Gewichtskörper kann mit hoher Maßgenauigkeit und Oberflächenqualität hergestellt werden. Das Gussstück ist in aller Regel gratfrei und besitzt eine sehr glatte Oberfläche. Dadurch lassen sich aufwändige Nachbearbeitungsverfahren entweder völlig vermeiden oder auf ein Minimum reduzieren. Besondere Vorteile besitzt das Feingussverfahren bei kompliziert gestalteten Gewichtskörpern oder bei solchen Gewichtskörpern, welche nur mit hohem Aufwand bearbeitet werden können.

Ausführungsbeispiele des Erfindungsgegenstandes werden nachfolgend anhand der Zeichnung näher erläutert, wobei alle beschriebenen und/oder bildlich dargestellten Merkmale für sich oder in beliebiger Kombination den Gegenstand der vorliegenden Erfindung unabhängig von ihrer Zusammenfassung in den Ansprüchen oder deren Rückbeziehung bilden. Es zeigen:
- Fig. 1: eine bevorzugte Ausführungsform eines Gewichtskörper eines erfindungsgemäßen Wuchtgewichtes in Aufsicht,
- Fig. 2: den Gewichtskörper von Fig. 1 in Seitenansicht,
- Fig. 3: eine bevorzugte Ausführungsform einer Feder eines erfindungsgemäßen Wuchtgewichtes in Aufsicht,
- Fig. 4: die Feder von Fig. 3 in Seitenansicht,
- Fig. 5: eine bevorzugte Ausführungsform eines erfindungsgemäße Wuchtgewicht im Zusammenbau mit dem Gewichtskörper gemäß Fig. 1 und 2 sowie der Feder gemäß Fig. 3 und 4 in Aufsicht,
- Fig. 6: das Wuchtgewicht gemäß Fig. 5 in Seitenansicht, und
- Fig. 7: eine Draufsicht auf einen für die Befestigung der Feder am Gewichtskörper einsetzbaren Spannring in einer vergrößerten Ansicht.

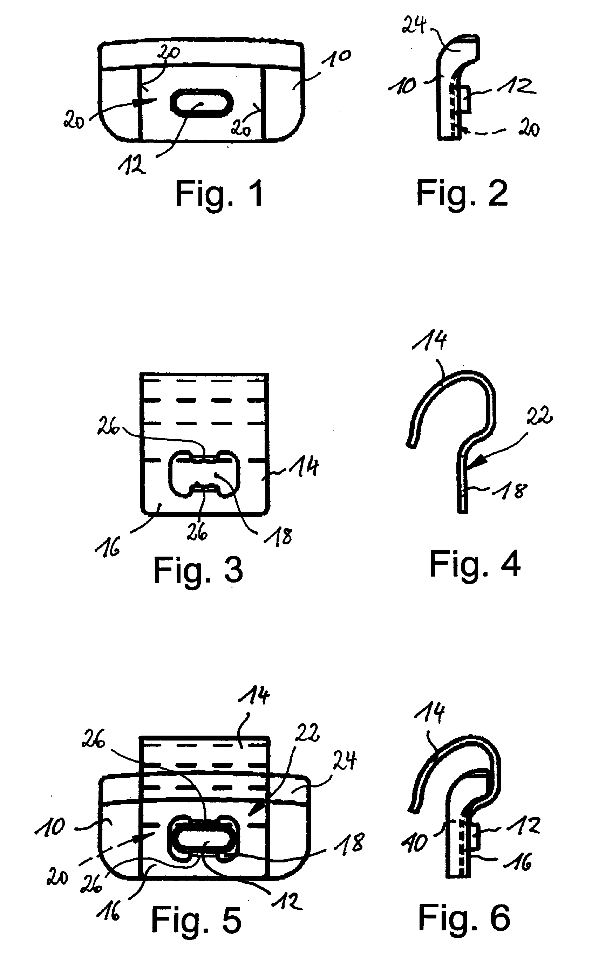

Eine beispielhafte, bevorzugte Ausführungsform eines erfindungsgemäßen Wuchtgewichtes ist in den Fig. 1 bis 6 dargestellt.

Fig. 1 und 2 veranschaulichen einen Gewichtskörper 10 für eine bevorzugte Ausführungsform eines erfindungsgemäßen Wuchtgewichtes. Der Gewichtskörper 10 weist an seiner Oberfläche eine Erhebung 12 auf, welche einstückig mit dem Gewichtskörper ausgebildet ist. Der Gewichtskörper 10 ist ein Tempergussteil, vorzugsweise ein in ausschmelzbaren Formen aus Wachs oder Kunststoff im Feingussverfahren hergestelltes Tempergussteil, d.h. der Gewichtskörper 10 ist ein im Tempergussverfahren hergestelltes Gussstück.

Bei dem Temperguss wird nach dem Gießvorgang durch lang anhaltendes Glühen (Tempern, Anlassen) über eine längere Zeitdauer, beispielsweise mehrere Tage, aus einem Rohguss, der dem Hartguss entspricht, ein Tempergussteil hergestellt. Dieses Tempergussteil unterscheidet sich gegenüber Grauguss durch seine Zähigkeit und Bearbeitbarkeit, insbesondere ist das Tempergussteil kaltverformbar. Der Kohlenstoff wird durch das Tempern flockenförmig als Temperkohle ausgeschieden. Der Temperguss vereinigt in sich die guten Gießeigenschaften des Graugusses mit einer nahezu stahlähnlichen Zähigkeit, ist schweißbar und gut zerspanbar.

Temperguss, oder schmiedbarer Guss, wird aus weiß erstarrendem Gusseisen in Formen gegossen und danach durch bestimmte Glühverfahren entkohlt oder in seiner Kohlenstoffform so umgewandelt, dass er zäh, hämmerbar, leicht bearbeitbar und in beschränktem Maß schmiedbar wird. Der Entwurf März 1926 zu DIN 1692 definiert Temperguss folgendermaßen: Temperguss ist ein Eisen-Kohlenstoff-Gusswerkstoff, dessen Zusammensetzung besonders hinsichtlich des C- und Si-Gehaltes so eingestellt ist, dass das Graugussstück bei werkstoffgerechter Konstruktion graphitfrei erstarren muss, d.h. dass der gesamte Kohlenstoff im Temperrohguss in gebundener Form als Eisencarbid (Zementit) vorliegt. Der Temperrohguss wird einer Glühbehandlung unterworfen, die bei verfahrensgerechter Gestaltung der Gussstücke zum restlosen Zerfall dieses Eisencarbids führt. Die chemische Zusammensetzung des Temperrohgusses und die Art des temperatur- und zeitabhängigen Glühverfahrens bestimmen den Gefügeaufbau des Werkstoffes und damit dessen Eigenschaften und Anwendungsmöglichkeiten.

Beim so genannten "weißen" od. deutschen Temperguss werden aus Gusseisen (mit 2,5 - 3,5% C) gegossene kleine Massenteile von Hammerschlag oder Roteisenstein (Körnung z.B. 6 - 9 mm) umgeben und in sog. Glühkisten 70 bis 120 Stunden lang auf 900 bis 1.000 °C erhitzt ("Tempern"). Hierbei wird der Kohlenstoff des Eisens in der obersten 2 bis 3 mm dicken Zone des Gussstückes mit Hilfe des Sauerstoffs vom Hammerschlag oder Eisenoxid zu Kohlendioxid verbrannt und entfernt. Das Gussstück besteht dann an seiner Oberfläche aus weichem, zähmen, schmiedbaren, kohlenstoffarmem Stahl (Ferrit). Im Inneren des Gussstückes wird das Fe₃C des Gusseisens durch die Erhitzung beim Tempern in Eisen und sog. Temperkohle zersetzt, die sich im Gegensatz zum groblamelligen Graphit in Form von sehr kleinen runden Einschlüssen abscheidet.

Der Kern (also das Innere des Gusstückes unter der entkohlten Außenzone) ist fest, hart, aber weniger zäh. Er besteht aus Temperkohle und Perlit. Die Brinellhärte beträgt beim Kern 150 bis 170 kg/mm², in der weicheren Außenzone etwa 125 kg/mm². Der dünnwandige, weiße Temperguss ist nach dem Tempern bis zu einem gewissen Grad schmiedbar. Durch das Tempern wird bei Massenartikeln die mühsame Schmiedung von Hand vermieden und man erhält aus dem spröden Gusseisen trotzdem eine Art Stahl.

Beim schwarzen Temperguss ("Schwarzguss" od. amerikanischer Guss) packt man die aus Gusseisen gegossenen Werkstücke in Quarzsand ein und erhitzt das Ganze 60 bis 100 Std. auf 900 bis 950 °C. Hierbei reagiert der Quarzsand nicht mit und das Gussstück wandelt sich überall gleichmäßig in Perlit u. feinst verteilte Temperkohle (durch Hitzezersetzung des Fe₃C entstanden, das im Roheisen Sprödigkeit verursacht) um. Nach dieser Hitzebehandlung werden die Gussstücke ebenfalls zäh und hämmerbar. Die Eigenschaften sind hier innen und an der Oberfläche gleich.

Fig. 3 und 4 veranschaulichen eine Feder 14 für eine bevorzugte Ausführungsform eines erfindungsgemäßen Wuchtgewichtes. Diese Feder 14 ist als Biegeteil oder Biegestanzteil ausgebildet. Die Feder 14 dient zum Befestigen des Wuchtgewichtes an einem Felgenhorn eines Fahrzeugrades (nicht dargestellt) an geeigneter Stelle, um dieses Fahrzeugrad auszuwuchten. Die Feder 14 weist an einem mit dem Gewichtsköper 10 zu verbindenden Ende 16 eine Ausnehmung 18 auf. Diese Ausnehmung ist derart ausgebildet, dass die Feder 14 mit dieser Ausnehmung 18 auf die Erhebung 12 des Gewichtsköpers 10 aufsteckbar ist.

Der zusammengesteckte Zustand von Gewichtsköper 10 und Feder 14 ist in Fig. 5 und 6 dargestellt. Nach dem Aufstecken wird die Feder 14 beispielsweise mittels Vernieten unter Verwendung der Erhebung 12 dauerhaft und unlösbar verbunden. Hierzu wird die Erhebung 14 durch Krafteinwirkung auf das freie Ende der Erhebung 12 derart kaltverformt, dass sich eine nietenartige Verbreiterung der Erhebung 12 ergibt, die breiter ist als die Ausnehmung 18 in der Feder 14. Durch die Kaltverformung der Erhebung wird ggf. auch der Werkstoff des Gewichtsköpers 10 im Bereich der Erhebung 12 an seinem Übergang in den Gewichtsköper 10 verbreitert, so dass die verformte Erhebung 12 an einem inneren Rand der Ausnehmung 18 anliegt und die Feder 14 fixiert. Dies wird beispielsweise dadurch unterstützt, dass die Erhebung 12 ausgehend vom Gewichtsköper 10 in Richtung des freien Endes der Erhebung 12 sich konisch erweiternd ausgebildet ist.

Gemäß insbesondere der in Fig. 6 gezeigten Seitenansicht ist die Feder 14 außen an der Oberfläche des Gewichtskörpers 10 befestigt. Damit ist es möglich, die Verbindung zwischen Feder 14 und Gewichtskörper 10 auch nach dem Befestigen des Wuchtgewichtes an dem Fahrzeugrad bzw. Felgenhorn (beides nicht gezeigt) optisch auf etwaige Beschädigungen hin zu überprüfen.

Gemäß einer genauer in den Fig. 1 und 2 sowie 5 und 6 gezeigten Ausführungsform weist der Gewichtskörper 10 eine Nut 20 auf, in der die Feder 14 (siehe Fig. 5 und 6) zumindest teilweise aufgenommen ist. Gemäß den Fig. 5 und 6 sitzt die Feder mit ihrem unteren Abschnitt 22 in der Nut 20 des Gewichtskörpers 10.

Wie genauer in den Fig. 1, 2 sowie 5 und 6 zu entnehmen ist, ist die Nut 20 zumindest in dem Bereich der Oberfläche des Gewichtskörpers 10 ausgebildet, welche die Erhebung 18 aufweist. Gemäß einer nicht näher gezeigten Ausführungsform der Erfindung ist es auch möglich, die Nut ferner im oberen, gekrümmten bzw. gewölbten Abschnitt 24 des Gewichtskörpers 10 vorzusehen, so dass die Feder auf ihrer gesamten, mit dem Gewichtskörper in Kontakt stehenden Länge in der Nut gehalten ist.

Gemäß einer besonders bevorzugten Ausführungsform der Erfindung ist die Feder 14 im Bereich ihrer Ausnehmung 18 spannringartig mit wenigstens einer Rastnase 26, vorzugsweise mit mehreren Rastnasen 26, ausgebildet. In den Fig. 3 und 5 sind schematisch einander gegenüberliegende Rastnasen 26 gezeigt. Die wenigstens eine Rastnase 26 ist fest mit der Erhebung 12 des Gewichtskörpers verbindbar, vorzugsweise verrastbar, wie dies in Fig. 5 schematisch angedeutet ist.

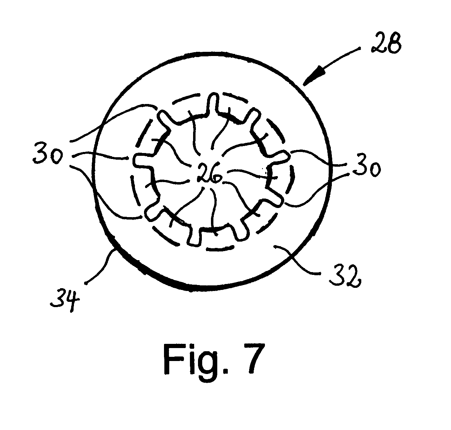

Gemäß einer anderen Ausführungsform sind Gewichtskörper 10 und Feder 14 mittels eines auf der Erhebung 12 sitzenden Spannrings 28 fest verbindbar. Ein solcher Spannring ist beispielhaft schematisch in Fig. 7 in einer Draufsicht gezeigt. Es ist klar, dass die Abmessungen des Spannrings 28 an diejenigen des Gewichtskörpers und insbesondere der Erhebung 12 angepasst sind. Insofern hätte ein Gewichtskörper, auf welchen der in Fig. 7 gezeigte Spannring aufgesteckt wird, eine Erhebung mit rundem Querschnitt.

Der Spannring 28 weist vorzugsweise mehrere an der Erhebung 12 des Gewichtskörpers verrastbare Rastnasen 26 auf. In dem in Fig. 7 gezeigten Ausführungsbeispiel hat der Spannring 28 neun Rastnasen 26. Die einzelnen Rastnasen 26 erstrecken sich in radialer Richtung des Spannrings, wobei sich zwischen benachbarten Rastnasen 26 jeweils ein Einschnitt 30 befindet. Insofern zeigt der Spannring gemäß Fig. 7 auch neun Einschnitte 30. Die einzelnen Rastnasen 26 können im Vergleich zum außen liegenden ringförmigen Abschnitt 32 des Spannrings leicht abgewinkelt und in der Draufsicht nach oben hin vorgebogen sein.

Der Spannring 28 hat vorzugsweise eine Umfangskante 34, welche zum ringförmigen Abschnitt 32 einen Winkel von 90° einschließt und deshalb in der Darstellung gemäß Fig. 7 aus der Zeichenebene nach oben hin vorsteht. Diese gewissermaßen umgebogene Umfangskante kann auch entfallen.

Es wird darauf hingewiesen, dass der Spannring auch in anderen Ausführungsformen ausgebildet sein kann. Es ist nicht zwingend erforderlich, dass der Spannring einen runden Querschnitt hat.

Ein Verfahren zum Herstellen eines Wuchtgewichtes zum Auswuchten von Fahrzeugrädern bzw. Felgen mit einem das Gewicht bildenden Gewichtskörper und einer Feder zum Befestigen des Wuchtgewichtes an einem Fahrzeugrad bzw. Felgenhorn ist dadurch gekennzeichnet, dass der Gewichtskörper und die Feder voneinander getrennt hergestellt werden und die Feder an einer Oberfläche des fertigen Gewichtskörpers befestigt wird.

Dies hat den Vorteil, dass die Verbindung zwischen Feder und Gewichtskörper auch nach dem Befestigen des Wuchtgewichtes an einem Fahrzeugrad bzw. Felgenhorn optisch auf etwaige Beschädigungen hin, die ggf. die Haltekraft an dem Fahrzeugrad bzw. Felgenhorn beeinträchtigen, überprüft werden kann.

Beispielsweise wird die Feder an der Oberfläche des Gewichtskörpers angenietet, angeschraubt, angeklebt, und/oder angeschweißt.

In einer besonders bevorzugten Ausführungsform wird an der Oberfläche des Gewichtskörpers eine Erhebung und in der Feder eine Öffnung ausgebildet, wobei die Feder mit der Öffnung auf die Erhebung aufgesteckt und die Feder durch vernieten mit der Erhebung an dem Gewichtskörper befestigt wird.

Dadurch, dass der Gewichtskörper mit einem Tempergussverfahren hergestellt wird, steht ein Gewichtskörper aus einem kaltverformbaren Werkstoff zur Verfügung.

Zweckmäßigerweise wird die Feder als Biege oder Biegestanzteil hergestellt.

## Patentansprüche

1. Wuchtgewicht zum Auswuchten von Fahrzeugrädern bzw. Felgen mit einem das Gewicht bildenden Gewichtskörper (10) und einer Feder (14) zum Befestigen des Wuchtgewichtes an einem Fahrzeugrad bzw. Felgenhorn,
**dadurch gekennzeichnet,**
**dass** die Feder (14) zwecks Möglichkeit der Überprüfung der Verbindung zwischen Feder (14) und Gewichtskörper (10) auch nach dem Befestigen des Wuchtgewichtes an dem Fahrzeugrad bzw. Felgenhorn optisch auf etwaige Beschädigungen hin außen an der Oberfläche des Gewichtskörpers (10) befestigt ist.

2. Wuchtgewicht nach Anspruch 1, **dadurch gekennzeichnet, dass** die Feder (14) mittels Nieten, Schrauben, Kleben und/oder Schweißen an der Oberfläche des Gewichtskörpers (10) befestigt ist.

3. Wuchtgewicht nach Anspruch 1 oder 2, **dadurch gekennzeichnet, dass** der Gewichtskörper (10) an seiner Oberfläche wenigstens eine Erhebung (12) aufweist, die durch wenigstens eine Ausnehmung (18) in der Feder (14) greift und in der Art einer Niete die Feder (14) an dem Gewichtskörper (10) befestigt.

4. Wuchtgewicht nach Anspruch 3, **dadurch gekennzeichnet, dass** die Erhebung (12) einstückig mit dem Gewichtskörper (10) ausgebildet ist.

5. Wuchtgewicht nach Anspruch 3 oder 4, **dadurch gekennzeichnet, dass** die Erhebung (12) rund, oval, elliptisch oder dreieckig ausgebildet ist.

6. Wuchtgewicht nach einem der vorhergehenden Ansprüche, **dadurch gekennzeichnet, dass** der Gewichtskörper (10) eine Nut (20) aufweist, in der die Feder (14) zumindest teilweise aufgenommen ist.

7. Wuchtgewicht nach Anspruch 6, **dadurch gekennzeichnet, dass** die Nut (20) zumindest in dem Bereich der Oberfläche des Gewichtskörpers (10) ausgebildet ist, welcher die Erhebung (12) aufweist.

8. Wuchtgewicht nach einem der vorhergehenden Ansprüche, **dadurch gekennzeichnet, dass** die Feder (14) im Bereich ihrer Ausnehmung (18) spannringartig mit wenigstens einer Rastnase (26), vorzugsweise mit mehreren Rastnasen, ausgebildet ist, wobei die wenigstens eine Rastnase (26) fest mit der Erhebung (12) des Gewichtskörpers (10) verbindbar, vorzugsweise verrastbar ist.

9. Wuchtgewicht nach einem der Ansprüche 1 bis 7, **dadurch gekennzeichnet, dass** Gewichtskörper (10) und Feder (14) mittels eines auf der Erhebung (12) sitzenden Spannrings (28) fest verbindbar sind, wobei der Spannring (28) vorzugsweise mehrere an der Erhebung (12) verrastbare Rastnasen (26) aufweist.

10. Wuchtgewicht nach einem der vorhergehenden Ansprüche, **dadurch gekennzeichnet, dass** der Gewichtsköper (10) ein Tempergussteil, vorzugsweise ein in ausschmelzbaren Formen aus Wachs oder Kunststoff im Feingussverfahren hergestelltes Tempergussteil ist.
